(19) Europäisches Patentamt / European Patent Office / Office européen des brevets

(11) **EP 3 816 822 A1**

(12) **EUROPEAN PATENT APPLICATION**

(43) Date of publication:
05.05.2021 Bulletin 2021/18

(51) Int Cl.:
*G06F 16/9535* (2019.01)     *G06F 16/335* (2019.01)

(21) Application number: **19206246.1**

(22) Date of filing: **30.10.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Robert Bosch GmbH**<br>**70442 Stuttgart (DE)**<br><br>(72) Inventor: **KHARLAMOV, Evgeny**<br>**81829 München (DE)** |

(54) **COMPUTER IMPLEMENTED METHOD AND SYSTEM FOR PROCESSING DATA FOR GENERATING DATA SUBSETS**

(57)     A computer-implemented method (100) for processing data for generating data subsets (SD1), comprising the steps of:
receiving (110) at least one data set (D1) that specifies a search result responsive to a search query, the data set (D1) including a plurality of data elements and the search query including at least one query term; identifying (120) a number of data elements in said data set (D1), each data element characterized by a weight (w) with regard to coverage of said query terms and/or coverage of a data schema of said data set (D1) and/or coverage of key data of said data set (D1), wherein the data elements are identified such that the total weight of the identified data elements is maximized.

Fig. 2

EP 3 816 822 A1

**Description**

Background

The disclosure concerns a computer implemented method and a system for processing data for generating data subsets from data sets wherein a data set comprises a plurality of data elements.

To find a particular data set out of a plurality of data sets recent efforts yielded data set search engines. Such search engines are for example configured to retrieve data sets that are relevant to a keyword query by matching the query with the description in the metadata of each data set.

Other data set search engines may present data set summaries, which are mainly composed of some metadata about the data set, such as provenance and license. Their utility in relevance judgment is limited, with users having to analyze each data set in the search results to assess its relevance, which would be a time-consuming process.

The purpose of the present disclosure is to provide a method and system for computing optimal data subsets, wherein a data subset is a representative subset of a data set, also known as data snippet.

A data subset aims at concisely explaining the user why the represented data set fulfils their demand and in particular can illustrate the main content of the data set and explains its relevance to user's query.

Disclosure of the invention

This is achieved by the device and methods according to the independent claims.

A computer-implemented method for processing data for generating data subsets comprises the steps of:

receiving at least one data set that specifies a search result responsive to a search query, the data set including a plurality of data elements and the search query including at least one query term;

identifying a number of data elements in said data set, each data element characterized by a weight with regard to coverage of said query terms and/or coverage of a data schema of said data set and/or coverage of key data of said data set, wherein the data elements are identified such that the total weight of the identified data elements is maximized.

According to an embodiment, the method further comprises the step of generating a data subset comprising the identified data elements.

According to an embodiment, a data element of said at least one data set is a RDF, Resource Description Framework, triple comprising subjects, predicates, and objects. More particular, the data set is a set of RDF triples denoted by $T = \{t_1, t_2, \cdots, t_n\}$, where each $t_i = \langle t_i^s, t_i^p, t_i^o \rangle$ is a subject-predicate-object triple of RDF resources. The subject $t_i^s$ of a triple $t_i$ is an entity (i.e., a non-literal resource at the instance level) that appears in the data set. The predicate $t_i^p$ represents a property. The object $t_i^o$ is a value of $t_i^p$, which can be a class, a literal, or another entity in the data set.

According to an embodiment, the weight of a data element comprises a value for the coverage of the query terms and/or a value for the coverage of the data schema of the data set and/or a value for the coverage of key data of the data set.

According to an embodiment, the value for the coverage of a query term is evaluated by $\frac{1}{|Q|}$, if said query term is instantiated in said data element, wherein Q represents the search query including the query term.

According to an embodiment, the value for the coverage of the data schema for a data element is evaluated either by a relative frequency of a class observed in the data set if said class is instantiated in said data element or by a relative frequency of a property observed in the data set if said property is instantiated in said data element. More particular, the relative frequency of a class c observed in the data set is given by

$$frqCls\,(c) = \frac{|\{t \in T : t^p = rdf:type \text{ and } t^o = c\}|}{|\{t \in T : t^p = rdf:type\}|},$$

where T represents the set of triples in the data set. Analogously, the relative frequency of a property p observed in the data set is given by

$$frqPrp\ (p) = \frac{|\{t \in T : t^p = p\}|}{|T|}.$$

According to an embodiment, value for the coverage of key data is evaluated by a mean normalized out-degree and in-degree of an entity of said data set if said entity is instantiated in said data element. Central entities represent the key content of the data set. If the data set is a directed graph comprising nodes, called entities, and lines connecting the nodes are called edges. An entity e comprises an out-degree, given by d⁺(e), and an in-degree, given by d⁻(e), in the RDF graph representation of the data set. The in-degree represents the number of edges incoming to an entity and the out degree represents the number of edges outgoing from an entity, respectively.

The mean normalized out-degree and in-degree is given by

$$\frac{\log(d^+(x) + 1)}{\sum_{e \in Ent(T)} \log(d^+(e) + 1)} + \frac{\log(d^-(x) + 1)}{\sum_{e \in Ent(T)} \log(d^-(e) + 1)},$$

where Ent(T) is the set of entities that appear in T.

According to an embodiment, in said weight of a data element the value for the coverage of the query terms and/or the value for the coverage of the data schema of the data set and/or the value for the coverage of key data of the data set are weighted by multiplication with a weighting factor.

According to an embodiment, the data subset comprising the identified data elements maximizes an objective function

$$q(SD1) = \sum w(x),$$

wherein SD1 represents said data subset and w represents the weight for x being a query term or a class in the data schema of the data set or a property in the data schema of the data set or an entity in the data set.

More particular, the data subset maximizes the objective function

$$q(SD1) = \sum_{x \in \cup_{t_i \in S} cov(t_i)} w(x),$$

with x being an element of cov(t$_i$), wherein cov(t$_i$) represents a set consisting of the query terms covered by t$_i$, the class instantiated in t$_i$, the property instantiated in t$_i$ and the entities that appear in t$_i$

Preferably, the generation of data subsets can be formulated as a combinatorial optimization problem, aiming to find a data subset such that it contains the query terms and an instantiation of the most frequently used classes and properties in the data set and contains entities having the highest scores in the data set, wherein the optimization problem is solved by a data subset, which maximizes the objective function.

According to an embodiment, the step of identifying data elements comprises identifying a limited number of data elements.

According to an embodiment, said method further comprises prior to receiving the data set that specifies the search result responsive to the search query the step of receiving the search query and the step of conducting a search.

The disclosure also concerns a data subset comprising the identified data elements, which maximizes the objective function q(SD1) = ∑w(x).

The disclosure also concerns a system for processing data for generating data subsets, wherein the system is configured to carry out the method according to any of the embodiments.

The disclosure also concerns a computer program, wherein the computer program comprises computer readable instructions that when executed by a computer cause the computer to execute a method according to the embodiments.

The disclosure also concerns the use of a method according the embodiments and/or a system according to the embodiments and/or a computer program according to the embodiments for generating data subsets in a data set search engine.

Further advantageous embodiments are derived from the following description and the drawings. In the drawings

Fig. 1    depicts a schematic view of a computer-implemented method according to an embodiment;

Fig. 2    depicts a schematic view of a block diagram of a system according to an embodiment;

Fig. 3    depicts a schematic view of a block diagram of a system according to another embodiment;

Fig. 4    depicts average evaluation scores of data subset processed with different methods, and

Fig. 5    depicts average evaluation scores of data subset processed with a method according to the embodiments.

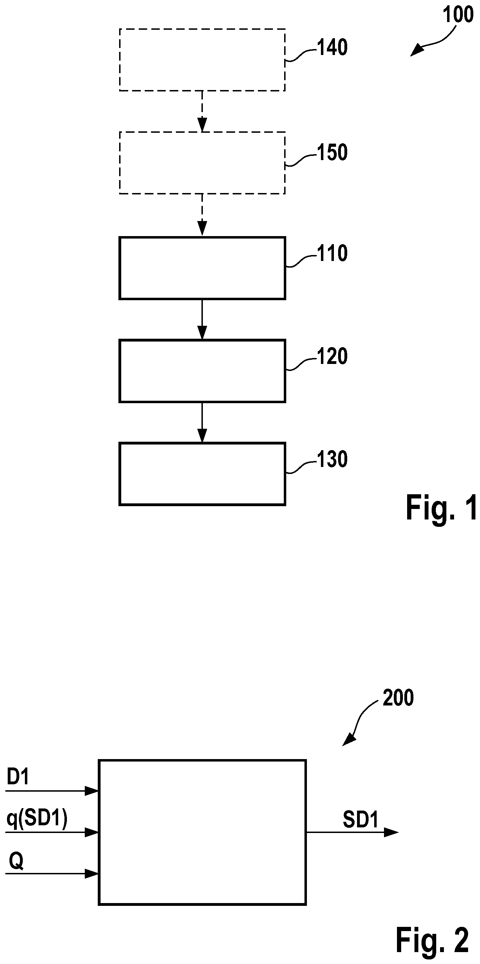

Fig. 1 depicts a schematic view of a computer-implemented method 100 for processing data for generating data subsets. According to the embodiment, the method comprises the steps of:

receiving 110 at least one data set that specifies a search result responsive to a search query, the data set including a plurality of data elements and the search query including at least one query term and
identifying 120 a number of data elements in said data set, each data element characterized by a weight with regard to coverage of said query terms and/or coverage of a data schema of said data set and/or coverage of key data of said data set, wherein the data elements are identified such that the total weight of the identified data elements is maximized.

According to the embodiment, the method 100 further comprises the step of generating 130 a data subset comprising the identified data elements.
According to an embodiment, the method 100 further comprises prior to receiving 110 the data set that specifies the search result responsive to the search query the step of receiving 140 the search query and the step conducting 150 a search.
Fig. 2 depicts a schematic view of a block diagram of a system 200 for processing data for generating data subsets.
The system 200 is configured to carry out at least the steps 110, 120 and 130 of the method 200.
According to an embodiment, the system 200 is further configured to carry out the steps 140 and 150 of the method 100.
The system 200 receives 110 at least one data set D1 that specifies a search result responsive to a search query. The data set D1 includes a plurality of data elements and the search query includes at least one query term.
According to an embodiment, the system 200 receives a plurality of data sets D1, wherein each data set D1 specifies a search result responsive to a search query.
According to an embodiment, a search query is a set of query terms denoted by

$$Q = \{q_1; q_2; \ldots; q_m\}.$$

According to an embodiment, the data elements of the data set D1 are a RDF, Resource Description Framework, triples comprising subjects, predicates, and objects. The data set D1 is a set of RDF triples denoted by $T = \{t_1, t_2, \cdots, t_n\}$, where each $t_i = \langle t_i^s, t_i^p, t_i^o \rangle$ is a subject-predicate-object triple of RDF resources.

The subject $t_i^s$ of a triple $t_i$ is an entity (i.e., a non-literal resource at the instance level) that appears in the data set D1. The predicate $t_i^p$ represents a property. The object $t_i^o$ is a value of $t_i^p$, which can be a class, a literal, or another entity in the data set D1.
The system 200 identifies 120 a number of data elements in said data set D1. Each data element is characterized by a weight with regard to coverage of said query terms and/or coverage of a data schema of said data set D1 and/or coverage of key data of said data set D1. According to the embodiment, the data elements are identified such that the total weight of the identified data elements is maximized.
According to an embodiment, the weight of a data element comprises a value for the coverage of the query terms and/or a value for the coverage of the data schema of the data set D1 and/or a value for the coverage of key data of the data set D1.

According to an embodiment, the value for the coverage of a query term is evaluated by $\frac{1}{|Q|}$, if said query term is instantiated in said data element, wherein Q represents the search query including the query term.

According to an embodiment, the value for the coverage of the data schema for a data element is evaluated either by a relative frequency *frqCls* of a class observed in the data set D1 if said class is instantiated in said data element or by a relative frequency *frqPrp* of a property observed in the data set D1 if said property is instantiated in said data element.

The relative frequency of a class c observed in the data set D1 is given by

$$frqCls\ (c) = \frac{|\{t \in T: t^p = rdf:type\ and\ t^o = c\}|}{|\{t \in T: t^p = rdf:type\}|},$$

where T represents the set of triples in the data set D1. Analogously, the relative frequency of a property *p* observed in the data set D1 is given by

$$frqPrp\ (p) = \frac{|\{t \in T: t^p = p\}|}{|T|}.$$

According to an embodiment, the value for the coverage of key data is evaluated by a mean normalized out-degree and in-degree of an entity of said data set D1 if said entity is instantiated in said data element.

If the data set is a directed graph comprising nodes, called entities, and lines connecting the nodes are called edges. An entity e comprises an out-degree, given by $d^+(e)$, and an in-degree, given by $d^-(e)$, in the RDF graph representation of the data set. The in-degree represents the number of edges incoming to an entity and the out degree represents the number of edges outgoing from an entity, respectively.

The mean normalized out-degree and in-degree is given by

$$\frac{\log(d^+(x) + 1)}{\sum_{e \in Ent(T)} \log(d^+(e) + 1)} + \frac{\log(d^-(x) + 1)}{\sum_{e \in Ent(T)} \log(d^-(e) + 1)},$$

where Ent(T) is the set of entities that appear in T.

According to an embodiment, in said weight of a data element the value for the coverage of the query terms and/or the value for the coverage of the data schema of the data set and/or the value for the coverage of key data of the data set are weighted by multiplication with a weighting factor $\alpha,\ \beta,\ \gamma$.

According to an embodiment, the weight of x, being a query term or a class in the data schema of the data set or a property in the data schema of the data set or an entity in the data set, is given by

$$w(x) = \begin{cases} \alpha * \dfrac{1}{|Q|} & x \in Q, \\[2ex] \beta * frqCls(x) & x \in Cls(D1), \\[2ex] \beta * frqPrp(x) & \in Prp\ (D1), \\[2ex] \gamma * \left( \dfrac{\log(d^+(x) + 1)}{\sum_{e \in Ent(T)} \log(d^+(e) + 1)} + \dfrac{\log(d^-(x) + 1)}{\sum_{e \in Ent(T)} \log(d^-(e) + 1)} \right) & x \in Ent\ (D1). \end{cases}$$

The weighting factors $\alpha,\ \beta,\ \gamma$ can be tuned, to balance between the value for the coverage of the query terms and the value for the coverage of the data schema of the data set and the value for the coverage of key data of the data set.

The system 200 is further configured to generate 130 the data subset SD1, wherein the data subset D1 comprises the identified data elements.

According to an embodiment, the data subset SD1 generated by system 200 comprising the identified data elements maximizes an objective function

$$q(SD1) = \sum_{x \in \cup_{t_i \in S}\ cov(t_i)} w(x), \quad subject\ to\ |S| \leq k,$$

wherein k is a predefined number of identified data elements and $cov(t_i)$ is set consisting of the query terms covered by a triple $t_i$, the class instantiated in the triple $t_i$, the property instantiated in the triple $t_i$, and the entities that appear in the $t_i$, the set $cov(t_i)$ corresponding to the triple $t_i$.

The data subsets SD1 generated according to the embodiments solves the combinatorial optimization problem, such that the total weight of the covered elements is maximized.

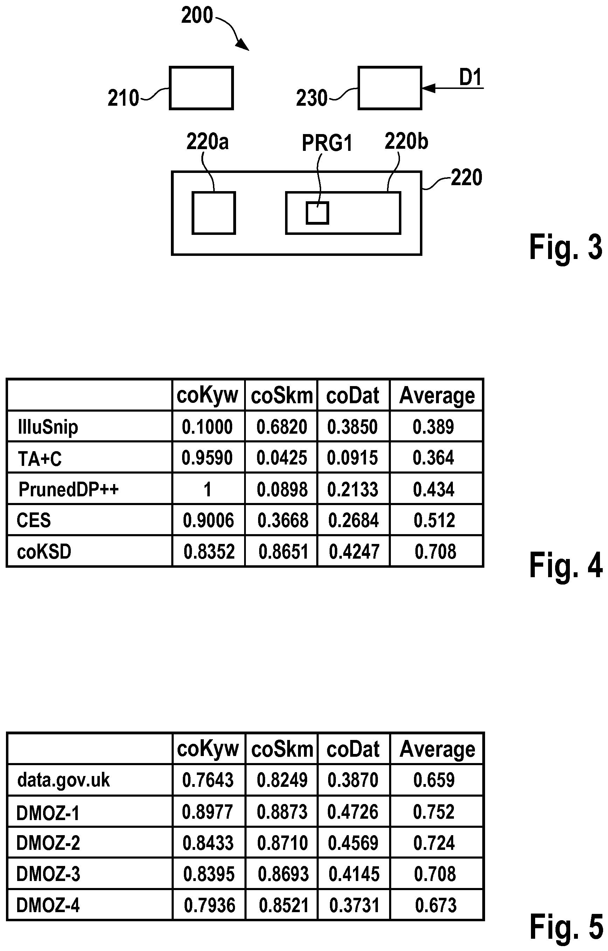

Fig. 3 depicts a schematic view of a block diagram of a system 200 according to another embodiment. The system 200 comprises a computing unit 210, e.g. a microprocessor and/or microcontroller and/or programmable logic device, in particular FPGA, and/or application-specific integrated circuit, ASIC, and/or digital signal processor, DSP, and/or a combination thereof.

The system 200 comprises a storing unit 220. The storing unit 220 may further comprise a volatile memory 220a, in particular random access memory (RAM), and a nonvolatile memory 220b, e.g. a flash EEPROM, on. The non-volatile memory 220b contains at least one computer program PRG1 for the computing unit 210, which controls the execution of the method according to the embodiments and / or any other operation of the system 200.

The system 200 may further comprise an interface unit 230 for receiving the data set D1 and/or the search query S from at least one external data source.

The data set D1 and the search query S can be stored in said volatile volatile memory 220a of said storing unit 220.

For processing the step of generating 130 the data subset SD1, the system 200 is preferably configured to receive the objective function q(SD1) and the search query S.

According to a further embodiment, the system 200 is configured carry out the steps of receiving 140 the search query and the step of conducting 150 a search. According to a further embodiment, the system 200 comprises suitable means, for example a user interface, for receiving the search query and a communication interface for conducting the search (not shown in the figures).

The quality of data subset SD1 generated according to the embodiments can be evaluated using one of the following evaluation metrics coKyw, coSkm, and coDat, which provides values all in the range of [0; 1].

A metric coKyw evaluates the coverage of query terms. A resource r covers a query term q if r's textual form, e.g. rdfs:label of an IRI or blank node, lexical form of a literal, contains a keyword match for q. A triple t covers a query term q, denoted by $t \prec q$, if r covers q for any $r \in \{t^s, t^p, t^o\}$. For a data subset SD1, the coKyw metric evaluates its coverage of query terms:

$$coKyw(SD1) = \frac{1}{|Q|} \cdot |\{q \in Q : \exists t \in S, t \prec q\}|.$$

A metric coSkm evaluates the coverage of a data schema of the data set D1, wherein the data set is in the RDF format. The relative frequency of a class c observed in the data set D1 is given by

$$frqCls(c) = \frac{|\{t \in T : t^p = rdf:type \text{ and } t^o = c\}|}{|\{t \in T : t^p = rdf:type\}|}.$$

Analogously, the relative frequency of a property p observed in the data set D1 is given by

$$frqPrp(p) = \frac{|\{t \in T : t^p = p\}|}{|T|}.$$

For a data subset SD1, its coverage of the schema of the data set D1 is the harmonic mean (hm) of the total relative frequency of the classes and properties it contains:

$$coSkm(SD1) = hm(\sum_{c \in Cls(SD1)} frqCls(c), \sum_{p \in Prp(SD1)} frqPrp(p)),$$

where Cls(SD1) is the set of classes instantiated in SD1 and Prp(SD1) is the set of properties instantiated in SD1.

A metric coDat evaluates the coverage of key data of the data set D1. Central entities represent the key content of the data set D1. If the data set D1 is a directed graph comprising nodes, called entities, and lines connecting the nodes are called edges. An entity e comprises an out-degree, given by $d^+(e)$, and an in-degree, given by $d^-(e)$, in the RDF graph representation of the data set D1. The in-degree represents the number of edges incoming to an entity and the out degree represents the number of edges outgoing from an entity, respectively.

For a data subset SD1, its coverage of the entities in D1 is the harmonic mean (hm) of the mean normalized out-degree and in-degree of the entities it contains:

$$coDat(SD1) = hm\left(\frac{1}{|Ent(SD1)|} \cdot \sum_{e \in Ent(SD1)} \frac{\log(d^+(e)+1)}{max_{e' \in Ent(D1)} \log(d^+(e')+1)},\right.$$
$$\left.\frac{1}{|Ent(SD1)|} \cdot \sum_{e \in Ent(SD1)} \frac{\log(d^-(e)+1)}{max_{e' \in Ent(D1)} \log(d^-(e')+1)}\right).$$

The method 100 for processing data for generating data subsets SD1 has been implemented and evaluated by reusing 387 query data set pairs specified in Wang, X., Chen, J., Li, S., Cheng, G., Pan, J., Kharlamov, E., Qu, Y.: A framework for evaluating snippet generation for dataset search. In: ISWC 2019,. https://doi.org/10.1007/978-3-030-30793-6_39. The data sets were collected from DataHub and queries included 42 real queries submitted to data.gov.uk and 345 artificial queries comprising i category names in DMOZ referred to as DMOZ-i for i = 1; 2; 3; 4. The method was tested on an Intel Core i7-8700K (3.70GHz) with 10GB memory for the JVM.

Algorithm 1 Greedy Algorithm

Input: A data set D1, a search query Q, and a size bound k

Output: An optimum data subset SD1 ⊆ D1

1: $SD1 \leftarrow \emptyset$;

2: while $|SD1| < k$ do

3: $t^* \leftarrow argmax_{t\in(D1\setminus SD1)} (q(SD1 \cup \{t\}) - q(SD1))$;

4: $SD1 \leftarrow SD1 \cup \{t^*\}$;

5: end while

6: return SD1;

Algorithm 1 presents the greedy algorithm for the optimization problem, which at each stage chooses a set that contains the maximum weight of uncovered elements. It achieves an approximation ratio of $1 - \frac{1}{e}$.

Assuming (SD1 ∪ {t}) - q(SD1) is computed in O(1), the overall running time of a naive implementation of the algorithm is O(k*n), where n is the number of RDF triples t in D1. According to another embodiment, a priority queue to hold candidate triples can be used.

Among all the 387 query data set pairs, for 234 (60.47%) a data set snippet was generated within 1 second, and for 341 (88.11%) one was generated within 10 seconds. The median time was 0.51 second, showing promising performance for practical use.

The proposed method 100 was compared with four baseline methods, namely IlluSnip specified in [Cheng, G., Jin, C., Ding, W., Xu, D., Qu, Y.: Generating illustrative snippets for open data on the web. In: WSDM 2017. pp. 151-159 (2017)], TA+C specified in [Ge, W., Cheng, G., Li, H., Qu, Y.: Incorporating compactness to generate term-association view snippets for ontology search. Inf. Process. Manage. 49(2), 513-528 (2013)], PrunedDP++ specified in [Li, R., Qin, L., Yu, J.X., Mao, R.: Efficient and progressive group steiner tree search. In: SIGMOD 2016. pp. 91{106 (2016)], and CES specified in [Feigenblat, G., Roitman, H., Boni, O., Konopnicki, D.: Unsupervised query-focused multi-document summarization using the cross entropy method. In: SIGIR 2017. pp. 961{964 (2017)]. Number k was set to 20.

Fig. 4 depicts a table, which presents the average scores of the three evaluation metrics coKyw, coSkm and coDat over all the query data set pairs. Compared with the baselines, the method 100 achieved the highest overall score of 0.708. In particular, the coverage of the method 100 of data schema coSkm = 0,8651 and data coDat = 0,4247 were at the top. The coverage of query terms coKyw = 0,8352 was close to TA+C, PrunedDP++, and CES which are query-focused methods. Therefore, the method 100 achieved a satisfying trade-off between these evaluation metrics.

Fig. 5 depicts a table, which breaks down the scores of the method 100 into groups of query data set pairs. The scores on different groups were generally consistent with each other, demonstrating the robustness of the method 100.

According to an embodiment, the method 100 according the embodiments and/or the system 200 according to the embodiments and/or the computer program PRG 1 according to the embodiments are used for generating data subsets in a data set search engine. The generated data subset SD1 can help users to judge the relevance of a retrieved data set D1.

**Claims**

1. Computer-implemented method (100) for processing data for generating data subsets (SD1), comprising the steps of:

   receiving (110) at least one data set (D1) that specifies a search result responsive to a search query, the data set (D1) including a plurality of data elements and the search query including at least one query term;
   identifying (120) a number of data elements in said data set (D1), each data element **characterized by** a weight (w) with regard to coverage of said query terms and/or coverage of a data schema of said data set (D1) and/or coverage of key data of said data set (D1), wherein the data elements are identified such that the total weight of the identified data elements is maximized.

2. The method (100) according to claim 1, wherein the method further comprises the step of generating (130) a data subset (SD1) comprising the identified data elements.

3. The method (100) according to any of the preceding claims, wherein a data element of said at least one data set (D1) is a RDF, Resource Description Framework, triple comprising subjects, predicates, and objects.

4. The method (100) according to any of the preceding claims, wherein the weight (w) of a data element comprises a value for the coverage of the query terms and/or a value for the coverage of the data schema of the data set (D1) and/or a value for the coverage of key data of the data set (D1).

5. The method (100) according to any of the preceding claims, wherein the value for the coverage of a query term is evaluated by $\frac{1}{|Q|}$ if said query term is instantiated in said data element, wherein Q represents the search query including the query term.

6. The method (100) according to any of the preceding claims, wherein the value for the coverage of the data schema for a data element is evaluated either by a relative frequency of a class observed in the data set if said class is instantiated in said data element or by a relative frequency of a property observed in the data set if said property is instantiated in said data element.

7. The method (100) according to any of the preceding claims, wherein the value for the coverage of key data is evaluated by a mean normalized out-degree and in-degree of an entity of said data set (D1) if said entity is instantiated in said data element.

8. The method (100) according to any of the preceding claims, wherein in said weight (w) of a data element the value for the coverage of the query terms and/or the value for the coverage of the data schema of the data set (D1) and/or the value for the coverage of key data of the data set (D1) are weighted by multiplication with a weighting factor $(\alpha, \beta, \gamma)$.

9. The method (100) according to any of the preceding claims, wherein the data subset (SD1) comprising the identified data elements maximizes an objective function $q(SD1) = \sum w(x)$, wherein SD1 represents said data subset (SD1) and w represents the weight for each x being a query term or a class in the data schema of the data set or a property in the data schema of the data set or an entity in the data set.

10. The method (100) according to any of the preceding claims, wherein the step of identifying (120) data elements comprises identifying (120) a limited number (k) of data elements.

11. The method (100) according to any of the preceding claims, wherein said method further comprises prior to receiving (110) the data set (D1) that specifies the search result responsive to the search query the step of receiving (140) the search query and the step of conducting (150) a search.

12. System for processing data for generating data subsets (SD1), wherein the system is configured to carry out the method (100) according to any of the claims 1 to 11.

13. Computer program (PRG 1), wherein the computer program (PRG 1) comprises computer readable instructions that when executed by a computer cause the computer to execute a method (100) according to claims 1 to 11.

14. Use of a method (100) according to any of the claims 1 to 11 and/or a system (200) according to claim 12 and/or a computer program (PRG 1) according to the embodiments for generating data subsets (SD1) in a data set search engine.

Fig. 1

Fig. 2

Fig. 3

|  | coKyw | coSkm | coDat | Average |
|---|---|---|---|---|
| IlluSnip | 0.1000 | 0.6820 | 0.3850 | 0.389 |
| TA+C | 0.9590 | 0.0425 | 0.0915 | 0.364 |
| PrunedDP++ | 1 | 0.0898 | 0.2133 | 0.434 |
| CES | 0.9006 | 0.3668 | 0.2684 | 0.512 |
| coKSD | 0.8352 | 0.8651 | 0.4247 | 0.708 |

Fig. 4

|  | coKyw | coSkm | coDat | Average |
|---|---|---|---|---|
| data.gov.uk | 0.7643 | 0.8249 | 0.3870 | 0.659 |
| DMOZ-1 | 0.8977 | 0.8873 | 0.4726 | 0.752 |
| DMOZ-2 | 0.8433 | 0.8710 | 0.4569 | 0.724 |
| DMOZ-3 | 0.8395 | 0.8693 | 0.4145 | 0.708 |
| DMOZ-4 | 0.7936 | 0.8521 | 0.3731 | 0.673 |

Fig. 5

Europäisches Patentamt
European Patent Office
Office européen des brevets

## EUROPEAN SEARCH REPORT

Application Number

EP 19 20 6246

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/169772 A1 (ALONSO OMAR [US] ET AL) 18 June 2015 (2015-06-18) <br> * abstract * <br> * paragraphs [0004], [0029] - [0034]; figure 4 * <br> ----- | 1-14 | INV. <br> G06F16/9535 <br> G06F16/335 |
| X | US 2014/214814 A1 (SANKAR SRIRAM [US] ET AL) 31 July 2014 (2014-07-31) <br> * abstract * <br> * paragraphs [0005] - [0007], [0034] - [0054]; figure 4 * <br> ----- | 1-14 | |
| X | US 2010/268702 A1 (WISSNER JAMES M [US] ET AL) 21 October 2010 (2010-10-21) <br> * abstract * <br> * paragraphs [0104] - [0110], [0182] * <br> ----- | 1-14 | |

TECHNICAL FIELDS
SEARCHED      (IPC)

G06F

The present search report has been drawn up for all claims

| Place of search | Date of completion of the search | Examiner |
|---|---|---|
| Berlin | 16 March 2020 | Siódmok, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 6246

This annex lists the patent family members relating to the patent documents cited in  the above-mentioned European search report.
The members are as contained in the European Patent Office EDP file on
The European Patent Office is in no way liable for these particulars which are merely given for the purpose of information.

16-03-2020

| Patent document cited in search report | | Publication date | Patent family member(s) | | Publication date |
|---|---|---|---|---|---|
| US 2015169772 | A1 | 18-06-2015 | NONE | | |
| US 2014214814 | A1 | 31-07-2014 | NONE | | |
| US 2010268702 | A1 | 21-10-2010 | US 2010268702 | A1 | 21-10-2010 |
| | | | US 2015248496 | A1 | 03-09-2015 |
| | | | WO 2010120929 | A2 | 21-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, X. ; CHEN, J. ; LI, S. ; CHENG, G. ; PAN, J. ; KHARLAMOV, E. ; QU, Y.** A framework for evaluating snippet generation for dataset search. *ISWC,* 2019, https://doi.org/10.1007/978-3-030-30793-6_39

- **CHENG, G. ; JIN, C. ; DING, W. ; XU, D. ; QU, Y.** Generating illustrative snippets for open data on the web. *WSDM 2017,* 2017, 151-159

- **GE, W. ; CHENG, G. ; LI, H. ; QU, Y.** Incorporating compactness to generate term-association view snippets for ontology search. *Inf. Process. Manage.,* 2013, vol. 49 (2), 513-528

- **LI, R. ; QIN, L. ; YU, J.X. ; MAO, R.** Efficient and progressive group steiner tree search. *SIGMOD 2016,* 2016, vol. 106, 91

- **FEIGENBLAT, G. ; ROITMAN, H. ; BONI, O. ; KONOPNICKI, D.** Unsupervised query-focused multi-document summarization using the cross entropy method. *SIGIR 2017,* 2017, vol. 964, 961